# EUROPÄISCHE PATENTSCHRIFT

(11) **EP 0 827 850 B1**
(45) Veröffentlichungstag und Bekanntmachung des Hinweises auf die Patenterteilung: **24.05.2000**
(21) Anmeldenummer: 97114305.2
(22) Anmeldetag: 19.08.1997
(51) Int. Cl.: B60G 17/056

(54) **Niveauregelventil zum selbsttätigen Konstanthalten der Fahrzeughöhe eines Nutzfahrzeuges mit Luftfederung**
Level controlling valve for keeping constant automatically the height of a commercial vehicle with pneumatic suspension
Soupape de régulation de niveau pour maintenir constante automatiquement la hauteur d'un véhicule utilitaire à suspension pneumatique

(30) Priorität: 05.09.1996 DE 19636002
(43) Veröffentlichungstag der Anmeldung: 11.03.1998
(73) Patentinhaber: Haldex Brake Products GmbH, 69123 Heidelberg (DE)
(72) Erfinder: Blanz, Roland, 69253 Heiligkreuzsteinach (DE)
(74) Vertreter: Patentanwälte Rehberg + Hüppe

(56) Entgegenhaltungen:
- DE-A- 1 966 636
- DE-A- 2 318 535
- DE-A- 3 716 436
- DE-C- 3 446 810
- DE-C- 4 416 280
- DE-C- 19 607 619

## Beschreibung

Die Erfindung bezieht sich auf ein Niveauregelventil mit den im Oberbegriff des Anspruches 1 angegebenen Merkmalen. Ein solches Niveauregelventil läßt sich allein, also ohne ein Wechselladeventil, in Verbindung mit Luftfederbälgen eines Fahrzeuges einsetzen. Es kann aber auch dann Verwendung finden, wenn ein luftgefedertes Fahrzeug vorgesehen ist, dessen Niveauhöhe über ein Wechselladeventil derart veränderbar ist, daß in der Stellung Heben das Niveauregelventil abgeschaltet ist und die dem Niveauregelventil zugeordneten Luftfederbälge parallel zum Niveauregelventil mit einer Druckluftquelle verbunden sind.

Ein Niveauregelventil der eingangs beschriebenen Art, allerdings mit Höhenbegrenzung, ist aus der DE 37 16 436 A1 bekannt. Der den Doppelventilkörper des Einlaßventils und des Auslaßventils betätigende Ventilstößel ist mit einem im Gehäuse gleitend verschiebbar gelagerten Führungsstück verbunden, welches eine Ausnehmung aufweist, in die ein Exzenternocken eines Verstelltriebes eingreift. Der Verstelltrieb weist einen Hebel, eine drehbar gelagerte Welle und den Exzenternocken auf. Zur Höhenbegrenzung ist eine hohle Steuerstange auf der dem Doppelventilkörper abgekehrten Seite mit dem Führungsstück verbunden. Die hohle Steuerstange trägt einen Entlüftungssitz, dem ein im Gehäuse federnd aufgehängter ringartiger und die Steuerstange umgebender Ventilkörper zugeordnet ist. Der Ventilkörper arbeitet andererseits mit einem gehäusefesten Einlaßsitz zusammen, so daß auf diese weise ein Absperrventil für eine zu den Bälgen führende Leitung gebildet ist. Damit wird die maximale Fahrzeughöhe festgelegt und begrenzt. Durch die Abschlußstellung, also die Stellung, in der sowohl das Einlaßventil wie auch das Auslaßventil des Niveauregelventils geschlossen sind, ist eine Zuordnung zu der Winkelstellung des Hebels des Verstelltriebes gegeben, und zwar derart, daß im allgemeinen einer horizontalen Ausrichtung des Hebels des Verstelltriebes die Abschlußstellung einer ersten Fahrzeughöhe zugeordnet ist. Dies bedeutet also, daß das Fahrzeug während der Fahrt eine erste festgelegte Fahrzeughöhe einnimmt, in der der Hebel des Verstelltriebes horizontal ausgerichtet ist und an dem Einlaß- und Auslaßventil die Abschlußstellung erreicht ist, so daß die Luftfederbälge weder be- noch entlüftet werden, sondern das Fahrgestell in der vorgesehenen Fahrzeughöhe tragen. Oft ist es sinnvoll, neben dieser ersten Fahrzeughöhe eine zweite, von der ersten Fahrzeughöhe abweichende Fahrzeughöhe einstellen zu können. Dies kann der Fall sein, um die Neigung eines Sattelaufliegers bei unterschiedlich hohen Aufsetzpunkten an Zugfahrzeugen zu korrigieren. Eine andere Möglichkeit besteht darin, bei Bussen den Fahrzeugaufbau in eine zweite fest vorgegebene Fahrzeughöhe abzusenken, um den Einstieg von Personen zu erleichtern. Eine dritte Möglichkeit kann sinnvoll sein, um in der zweiten Fahrzeughöhe einen vergleichsweise reduzierten Luftwiderstand zu erhalten. Aus Fig. 4 der DE 37 16 436 A1 ist ein Niveauregelventil bekannt, mit dem wahlweise eine erste und eine zweite Fahrzeughöhe ansteuerbar sind. Zu diesem Zweck ist die Ausnehmung in dem Führungsstück, in welche der Nocken des Verstelltriebes eingreift, mit entsprechend großem Spiel versehen, so daß der Nocken einmal auf der einen und zum anderen auf der anderen Seite der Ausnehmung in dem Führungsstück zur Anlage kommen kann. Dies entspricht den beiden unterschiedlichen Fahrzeughöhen. Um die beiden Fahrzeughöhen wahlweise anzusteuern, ist mit dem Führungsstück und der sich nach unten erstreckenden Steuerstange ein Steuerkolben fest verbunden, dem eine belüftbare Steuerkammer zugeordnet ist, die im Gehäuse des Niveauregelventils gebildet wird. Die belüftete Stellung des Steuerkolbens entspricht dabei der zweiten Fahrzeughöhe, während die erste Fahrzeughöhe über am Ventilstößel angreifende Federn erreicht wird, wenn die Steuerkammer nicht belüftet wird. Nachteilig hieran ist, daß der Steuerkolben bei Belüftung der Steuerkammer kraftmäßig auf das Führungsstück einwirkt und somit bei der eingestellten zweiten Fahrzeughöhe den Verstelltrieb kraftmäßig belastet. Insbesondere der in die Ausnehmung des Führungsstückes eingreifende Exzenternocken unterliegt einem hohen Verschleiß, der die Lebensdauer des Niveauregelventiles verkürzt. Weiterhin wirkt sich die Höhenbegrenzung in Verbindung mit den beiden einstellbaren Fahrzeughöhen dahingehend negativ aus, daß die Höhenbegrenzung bei der ersten eingestellten Fahrzeughöhe eine andere Wirkung erbringt als bei der zweiten eingestellten Fahrzeughöhe. Wenn die zweite Fahrzeughöhe höher als die erste Fahrzeughöhe liegend vorgesehen ist, muß der bis zu den Anschlägen der Luftfederbälge möglich maximale Hub des Fahrzeugaufbaus der Einstellung der zweiten Fahrzeughöhe zugeordnet werden. Damit aber wird die Höhenbegrenzung bei Einstellung der ersten Fahrzeughöhe früher wirksam, d. h. der maximale Hub kann für die erste Fahrzeughöhe nicht ausgenutzt werden.

Aus der DE 23 18 535 A1 ist ein Niveauregelventil einer anderen Bauart bekannt, bei der die Welle des Verstelltriebes verlängert ist und in paralleler Anordnung zu dem Ventilstößel für das Ein- und Auslaßventil weitere Elemente vorgesehen sind, beispielsweise ein zweites großquerschnittiges Auslaßventil. Auch Niveauregelventile dieser Bauart lassen sich mit einer Höhenbegrenzung versehen. Andererseits ist auch die Einstellung einer zweiten Fahrzeughöhe möglich. Die wahlweise Einstellung von zwei unterschiedlichen Fahrzeughöhen wird dabei auch als Nullpunktverstellung bezeichnet. Diese Nullpunktverstellung wird ähnlich wie bei Fig. 4 der DE 37 16 436 dadurch verwirklicht, daß zwischen dem Exzenternocken des Verstelltriebes und der Ausnehmung im Führungsstück ein relativ großes Spiel vorgesehen ist, welches beim Wechsel der beiden Fahrzeughöhen überbrückt wird.

In der an 03.09.97 veröffentlichten europäischen Anmeldung EP-A-0 792 762 (Priorität: 29.02.96 DE 19 607 619), die als Stand der Technik gemäß Art. 54/3) und (4) EPü gilt, ist bereits vorgeschlagen worden, die Steuerkammer in dem Führungsstück des Verstelltriebes anzuordnen und den Steuerkolben in dem Führungsstück abgedichtet und begrenzt verschiebbar zu lagern. Damit bleibt der Exzenternocken des Verstelltriebes von einer über den Steuerkolben ausgeübten Stellkraft auch bei Einsteuerung auch der zweiten Fahrzeughöhe unbelastet. Der Ventilstößel ist an dem Steuerkolben abgestützt. Zum Einstellen der Abschlußstellung ist das Führungsstück geteilt und beide Teile über eine Gewindeverbindung miteinander verbunden. Das eine Teil steht mit dem Exzenternocken in Verbindung, das andere Teil ist ein im Gehäuse gedichtet gelagerter Zylinder, der die Steuerkammer bildet und über dessen gehäuseseitige Dichtungen die Luftzufuhr für die Steuerkammer in radialer Richtung erfolgt. Zur Einstellung der Abschlußstellung wird der Zylinder relativ zu dem an dem Exzenter angreifenden Teil des Führungsstücks in der Gewindeverbindung verdreht, was durch eine aufwendige Konstruktion im unteren Bereich des Niveauregelventils ermöglicht und nur unter Verwendung eines speziellen Werkzeuges möglich ist.

Der Erfindung liegt die Aufgabe zugrunde, ein Niveauregelventil der eingangs beschriebenen Art derart weiterzubilden, daß mit ihm wahlweise zwei Fahrzeughöhen einstellbar sind, die Einstellung der Abschlußstellung ohne Verwendung eines speziellen Werkzeuges in einfacher Weise möglich ist und trotzdem der die Lebensdauer des Niveauregelventils beeinträchtigende Verschleiß im Verstelltrieb, insbesondere am Exzenternocken, reduziert ist.

Erfindungsgemäß wird dies dadurch erreicht, daß das Führungsstück des Verstelltriebes nach der dem Einlaßsitz abgekehrten Seite verlängert und zu einer Hülse ausgeformt ist, daß zwischen dem Führungsstück und der Hülse eine Gewindeverbindung vorgesehen ist, daß die Steuerkammer in der Hülse des Verstelltriebes angeordnet ist und der Steuerkolben in der Hülse abgedichtet und begrenzt verschiebbar gelagert ist und durch seine Relativbewegung gegenüber der Hülse die Ansteuerung der zweiten Fahrzeughöhe zuläßt, ohne den Exzenternocken des Verstelltriebes durch die auf den Steuerkolben ausgeübte Stellkraft zu belasten, daß sich der in Richtung des Führungsstücks des Verstelltriebes vorgespannte Ventilstößel am Steuerkolben abstützt und daß die Hülse zumindest teilweise von einem am Gehäuse drehbar gelagerten Gehäusering umgeben ist, der mit der Hülse über eine axiale Bewegung der Hülse zulassende und bei Verdrehung des Gehäuserings eine Verdrehung der Hülse bewirkende Schiebekupplung in Verbindung steht.

Die Erfindung geht von dem Gedanken aus, das mit dem Exzenternocken des Verstelltriebes in Verbindung stehende Führungsstück zu teilen, wobei ein Teil verbleibt, welches dem bisherigen Führungsstück in etwa entspricht. Es wird darüberhinaus eine Hülse geschaffen, wobei die Hülse und das Führungsstück über eine Gewindeverbindung miteinander in Wirkverbindung stehen. Die Hülse bildet einen Zylinder und eine zylindrische Lauffläche für den Steuerkolben, der entweder direkt oder über Zwischenschaltung von Teilen sich am Ventilstößel abstützt und damit den Ventilstößel betätigt. Der Steuerkolben kann in der Hülse einen Hub ausführen, wobei der Beginn des Hubes, also die nicht belüftete Stellung der Steuerkammer der ersten Fahrzeughöhe, und das Ende des Hubes, also die belüftete Stellung des Steuerkolbens in der Steuerkammer, der zweiten Fahrzeughöhe zugeordnet sind.

Dieser Hülse und damit auch dem Hub des Steuerkolbens ist ein Gehäusering zugeordnet, der am Gehäuse des Niveauregelventils drehbar gelagert ist und insoweit die Möglichkeit bietet, in einfacher Weise mit der Hand verdreht zu werden. Zwischen dem Gehäusering und der Hülse ist eine Schiebekupplung vorgesehen, die sicherstellt, daß eine drehende Mitnahme zwischen Gehäusering und Hülse möglich ist, um die Gewindeverbindung zwischen Hülse und Führungsstück zu betätigen, also die Hülse vergleichsweise in das Führungsstück hineinzuschrauben oder aus diesem herauszuschrauben, so daß der Steuerkolben in der Hülse eine andere relative Lage bekommt. Andererseits muß aber der Gewindering mit seiner Schiebekupplung die freie axiale Bewegung der Hülse gestatten, so wie sie von dem Verstelltrieb über den Exzenternocken auf die Einheit aus Führungsstück und Hülse übertragen wird. Dieser Gewindering dient der Einstellung der Abschlußstellung, also letztlich der Zuordnung der Winkellage des Hebels des Verstelltriebes zu der Abschlußstellung des Ein/Auslaßventils des Niveauregelventils. Damit ist es in einfacher Weise möglich, diese Abschlußstellung einzustellen, ohne die relative Lage der beiden über den Hub des Stellkolbens festgelegten Fahrzeughöhen zueinander zu verändern. Da der Beginn des Hubes des Steuerkolbens, der für die erste Fahrzeughöhe maßgebend ist, in der Regel nicht verstellbar ist, wird über die Einstellung der Abschlußstellung auch die relative Lage der ersten Fahrzeughöhe zugeordnet. Dagegen ist es durchaus sinnvoll, die zweite Fahrzeughöhe relativ zur ersten Fahrzeughöhe verstellbar zu machen, was durch Verlängerung oder Verkürzung des Hubes des Steuerkolbens möglich ist.

Für die Realisierung der Schiebekupplung ergeben sich verschiedene Möglichkeiten. Eine bevorzugte Möglichkeit besteht darin, daß die Schiebekupplung sich axial erstreckende Rippen und entsprechenden Nuten am inneren Umfang des Gehäuserings einerseits und am äußeren Umfang der Hülse andererseits aufweist. Dies bedeutet, daß sowohl am Gehäusering einerseits wie auch am Umfang der Hülse Rippen vorgesehen sind, die wechselweise in Nuten am anderen Teil eingreifen. Die Rippen und die Nuten erstrecken sich in axialer Richtung, um die freie Beweglichkeit der Hülse relativ zum Gehäusering in axialer Richtung sicherzustellen. Statt der Rippen und Vertiefungen können auch einrastbare Vorsprünge, Querstifte o. dgl. Anwendung finden.

Die Hülse kann einen den Hub des Steuerkolbens in der Hülse festlegenden und auf ihr abgestützten Deckel aufweisen. Wichtig ist dabei, daß der Deckel nicht am Gehäuse oder Gehäusering, sondern auf der Hülse abgestützt ist, weil der Deckel die Steuerkammer begrenzt und damit je nach Ausbildung eine nicht unbeträchtliche Wirkfläche aufweist, die bei Belüftung der Steuerkammer belastet wird. Die dadurch hervorgerufene Kraft soll von dem Exzenternocken des Verstelltriebes ferngehalten werden, damit der Verschleiß in diesem Bereich reduziert ist.

Andererseits ergibt sich bei dem neuen Niveauregelventil vorteilhaft die Möglichkeit, die Steuerluft zur Steuerkammer des Steuerkolbens nicht mehr radial, sondern axial von unten zuzuführen. Dies wird dadurch möglich, daß der Deckel ringförmig ausgebildet ist und daß der Gehäusering einen in der Achse des Niveauregelventils den Deckel dichtend durchsetzenden Fortsatz aufweist, über den die Steuerluft zur Steuerkammer axial zuführbar ist. Dabei ist es wichtig, den inneren Durchmesser des Deckels und die dort angeordnete Dichtung mit einem möglichst kleinen Radius zu versehen, oder anders gesagt den Durchmesser des den Deckel durchsetzenden Fortsatzes möglichst klein zu wählen, damit der Exzenternocken bei belüfteter Steuerkammer von einer dadurch verursachten möglichst kleinen Kraft belastet wird und so der Verschleiß in diesem Bereich gering gehalten wird.

Der Deckel ist auf der Hülse in der Regel ortsfest gelagert. Wenn jedoch der Deckel über ein Gewinde in der Hülse verstellbar und damit der Hub des Steuerkolbens für die Einsteuerung der beiden Fahrzeughöhen einstellbar ist, kann damit der Beginn des Hubes des Steuerkolbens und damit die erste Fahrzeughöhe eingestellt werden.

Der Fortsatz des Gehäuserings kann einen Anschluß für die Leitung der Steuerluft tragen. Ein solcher Anschluß ist in der Regel drehbar ausgebildet, so daß er bei einer Verdrehung des Gehäuserings nicht geändert bzw. entfernt werden muß. Der Fortsatz des Gehäuserings ist über radiale Rippen mit dem übrigen Teil des Gehäuserings verbunden. Durch diese Durchbrechungen ist auch die gemeinsame Entlüftung des Niveauregelventils geführt, wobei die Entlüftungsöffnung am Gehäusering über ein Flatterventil abgedeckt ist, welches zugleich dem Eindringen von Schmutz entgegenwirkt. Der Gehäusering ist in einer Außennut am Gehäuse drehbar gelagert, und zwischen Gehäuse und Gehäusering ist eine Dichtung vorgesehen. Diese Dichtung hat Doppelfunktion. Sie verhindert das Eindringen von Schmutz und stellt gleichzeitig die Wirkung der Zentralentlüftung sicher. Zum anderen stellt die Dichtung eine Reibungsbremse dar, die die selbsttätige Verdrehung des Gehäuserings zusammen mit der Reibung in der Gewindeverbindung zwischen Hülse und Führungsstück bei einwirkenden Erschütterungen während der Fahrt verhindert.

Um die zweite Fahrzeughöhe relativ zur ersten Fahrzeughöhe einzustellen, kann der Steuerkolben eine durch den Fortsatz des Gehäuserings zugängliche Mehrkantöffnung und der Steuerkolben einen die Hülse und das Führungsstück durchsetzenden Fortsatz aufweisen, der den Ventilstößel betätigt und über eine Gewindeverbindung geteilt ist, um den Hub des Steuerkolbens und damit die zweite Fahrzeughöhe ohne zwangsweise Verstellung der Abschlußstellung und damit der ersten Fahrzeughöhe einzustellen. Unter Lösen der am Anschluß angeschlossenen Leitung für die Luftzuführung zur Steuerkammer wird damit der hohle Fortsatz des Gewinderings, der an sich der Zuleitung der Luft zur Steuerkammer dient, für den Durchtritt eines Mehrkantwerkzeuges nutzbar, mit dem der Mehrkantansatz im Steuerkolben und damit der Steuerkolben verdrehbar ist. Der Steuerkolben ist außerdem über eine Gewindeverbindung im Bereich eines das Führungsstück durchsetzenden Fortsatzes unterteilt, wobei sich das dem Ventilstößel zugekehrte Teil des Fortsatzes einerseits an der Hülse abstützt und andererseits mit einem Mehrkant in dem Führungsstück verdrehgesichert, jedoch axial beweglich gelagert ist. Damit ist es möglich, den Beginn des Hubes des Steuerkolbens veränderlich einzustellen, um so je nach Sichtweise, die erste oder zweite Fahrzeughöhe einzustellen.

Am Steuerkolben kann auf der dem Ventilstößel abgekehrten Seite eine Stellschraube vorgesehen sein, die mit der Hülse einen einstellbaren Anschlag für die Begrenzung des Hubes des Steuerkolbens bildet. Bei dieser Ausführungsform ist der Fortsatz des Steuerkolbens nicht unterteilt, sondern mit einem Anschlag an der Hülse abgestützt, wobei die Stellschraube je nach Einstellung das Ende des Hubes des Steuerkolbens beeinflußt, so daß damit die zweite Fahrzeughöhe ohne Zwangsverstellung der ersten Fahrzeughöhe einstellbar ist.

Die Erfindung wird anhand bevorzugter Ausführungsbeispiele weiter erläutert und beschrieben. Es zeigen:
- Fig. 1: einen Querschnitt durch eine erste Ausführungsform des Niveauregelventils mit von Hand verstellbarer Abschlußstellung und zwei einsteuerbaren Fahrzeughöhen,
- Fig. 2: den unteren Bereich des Niveauregelventils im Schnitt mit verringerter Krafteinwirkung auf den Exzenter bei Belüftung der Steuerkammer,
- Fig. 3: einen Schnitt durch eine weitergebildete Ausführungsform gemäß Fig. 2 mit einstellbarer zweiter Fahrzeughöhe,
- Fig. 4: einen Schnitt durch ein Niveauregelventil ähnlich Fig. 1, jedoch auch mit separat verstellbarer zweiter Fahrzeughöhe, und
- Fig. 5: eine weitere Ausführungsform des Niveauregelventils mit einstellbarer zweiter Fahrzeughöhe.

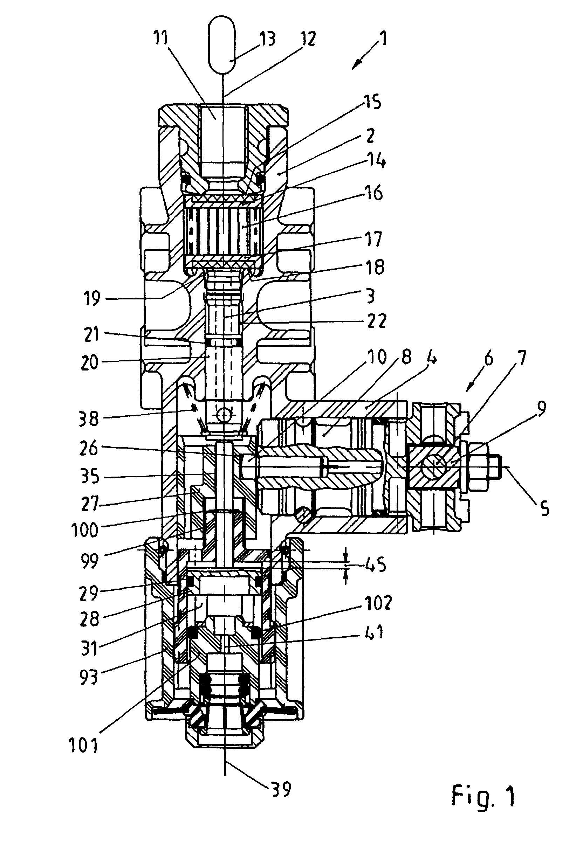

Das in Fig. 1 dargestellte Niveauregelventil 1 weist ein Gehäuse 2 auf, welches eine Achse 3 besitzt, zu der fluchtend wesentliche Elemente des Niveauregelventils 1 angeordnet sind. Das Gehäuse 2 besitzt einen Fortsatz 4, dessen Achse 5 rechtwinklig zu der Achse 3 angeordnet ist und zur Unterbringung wesentlicher Elemente eines Verstelltriebes 6 dient. Der Verstelltrieb 6 weist einen nur teilweise dargestellten Hebel 7 auf, der mit seinem einen Ende in eine radiale Bohrung einer welle 8 eingesteckt und über eine Befestigungsschraube 9 fixiert ist. Das nicht dargestellte andere Ende des Hebels 7 ist mit der Fahrzeugachse verbunden, während das Gehäuse 2 in der Regel mit senkrecht angeordneter Achse 3 mit dem Fahrgestell verbunden ist. Aber auch die umgekehrte Anordnung ist denkbar. Zum Verstelltrieb 6 gehört schließlich noch ein Exzenternocken 10, der exzentrisch in der einen Stirnfläche der Welle 8 sitzt.

Am Gehäuse 2 ist ein Anschluß 11 für eine Leitung 12 vorgesehen, über den unter Druck stehende Vorratsluft aus einem Vorratsbehälter 13 ansteht. Zwischen einem Ventilkörper 14 und einem Gehäuserand 15 ist ein Einströmventil 14, 15 gebildet, so daß in einer Vorratskammer 16 im Gehäuse 2 Vorratsluft ansteht. In der Vorratskammer 16 ist ein Doppelventilkörper 17 vorgesehen, der mit einem gehäuseseitigen Einlaßsitz 18 ein Einlaßventil 17, 18 bildet. Dem Doppelventilkörper 17 ist weiterhin ein Auslaßsitz 19 an einem Ventilstößel 20 zugeordnet, so daß hier ein Auslaßventil 17, 19 gebildet ist. Das Niveauregelventil 1 ist in der Abschlußstellung dargestellt, d. h. sowohl das Einlaßventil 17, 18 wie auch das Auslaßventil 17, 19 sind geschlossen.

Der Ventilstößel 20 ist mit Hilfe einer Dichtung 21 gleitend und dichtend im Gehäuse 2 des Niveauregelventils 1 verschiebbar gelagert. Die Dichtung 21 begrenzt gleichzeitig eine Einströmkammer 22, die um den Stößel 20 zwischen dem Doppelventilkörper 17 und der Dichtung 21 gebildet ist. Mit der Einströmkammer stehen über nicht dargestellte radiale Kanäle Leitungen in Verbindung, die jeweils zu Luftfederbälgen, beispielsweise der rechten und der linken Fahrzeugseite zugeordnet, führen.

Der Verstelltrieb 6 greift mit seinem Exzenternocken 10 in eine schlitzartige Ausnehmung 26 eines Führungsstückes 27 ein, welches fluchtend zu der Achse 3 des Gehäuses 2 gleitend verschiebbar gelagert ist, so daß bei einer Drehbewegung des Verstelltriebes 6 um die Achse 5 die rotatorische Bewegung des Exzenternockens 10 in eine translatorische Bewegung des Führungsstückes 27 in Richtung der Achse 3 umgeformt wird.

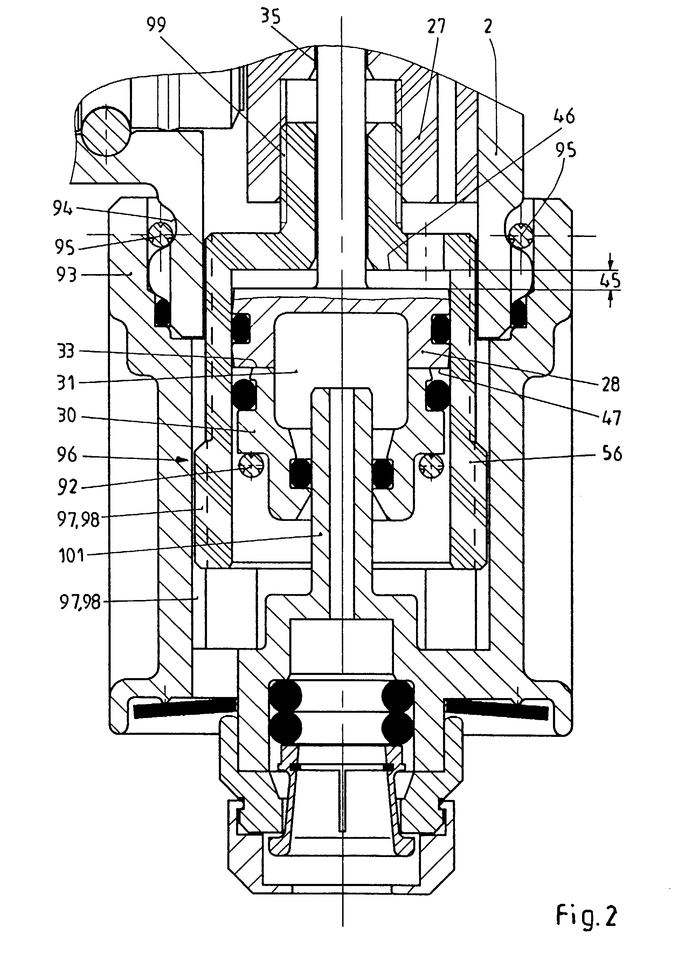

Das Führungsstück 27 weist eine Hülse 56 auf. In der Hülse 56 des Führungsstücks 27 ist ein Steuerkolben 28 mit einer Dichtung 29 begrenzt gleitend verschiebbar gelagert. Die Hülse 56 des Führungsstücks 27 kann mit einem Deckel 30 versehen sein (Fig. 2), der zwei Dichtungen trägt, über die eine Steuerkammer 31 zwischen Deckel 30 und Hülse 56 abgedichtet wird. Der Deckel 30 ist über Stifte 92 in der Hülse 56 des Führungsstücks 27 ortsfest festgelegt und bildet einen ersten Anschlag 33 für den Steuerkolben 28, der den Hub des Steuerkolbens 28 relativ zu dem Führungsstück 27 in der einen Endstellung begrenzt. Der Steuerkolben 28 nimmt die in Fig. 1 und 2 dargestellte eine Endlage dann ein, wenn die Steuerkammer 31 nicht beaufschlagt ist. Dies entspricht der ersten eingestellten Fahrzeughöhe. Der Steuerkolben 28 durchsetzt mit einem Schaft eine Durchbrechung 35 des Führungsstückes 27 und stützt sich damit an dem Ventilstößel 20 ab. Der Ventilstößel 20 ist zu Entlüftungszwecken hohl ausgebildet und wird von einer schwach dimensionierten Feder 38 kraftmäßig nach unten belastet, so daß letztendlich auch der Steuerkolben 28 an dem Anschlag 33 des Deckels 30 in Anlage gehalten ist.

Die Hülse 56 ist zumindest teilweise von einem Gehäusering 93 umgeben, der in einer Außennut 94 des Gehäuses 2 mit Hilfe von Bolzen 95 frei drehbar gelagert ist, ohne dadurch seine axiale Lage zu verändern. Der Gehäusering 93 ist über eine Schiebekupplung 96, die Rippen 97 und Nuten 98 aufweist, mit der Hülse 56 des Führungsstücks 27 gekuppelt. Damit kann sich die Hülse 56 gegenüber dem Gehäusering 93 axial bewegen. Bei Verdrehung des Gehäuserings 93 um die Achse 3 wird jedoch die Hülse 56 mitverdreht. Zwischen dem Führungsstück 27 und der Hülse 56 ist eine Gewindeverbindung 99 vorgesehen. Das Führungsstück 27 ist durch den Exzenternocken 10 verdrehgesichert geführt, so daß bei einem Verdrehen des Gehäuserings 93 die Hülse 56 in der Gewindeverbindung 99 relativ zum Führungsstück 27 verdreht wird. Da sich der Schaft des Steuerkolbens 28 über einen Sicherungsring 100 an der Hülse abstützt, kann somit der den Ventilstößel 20 betätigende Schaft des Steuerkolbens 28 in seiner relativen Lage zu dem Führungsstück 27 verändert und damit die Abschlußstellung des Niveauregelventils, also letztlich die Winkelstellung des Hebels 7 relativ zu der gemeinsamen Schließstellung des Ein/Auslaßventils des Niveauregelventils, eingestellt werden. Dies geschieht vorteilhaft von Hand durch Verdrehen des Gehäuserings 93 und damit ohne Verwendung eines Spezialwerkzeuges.

Statt des Deckels 30 (Fig. 2) kann die Steuerkammer 31 des Steuerkolbens 28 auch durch einen Fortsatz 101 des Gehäuserings 93 begrenzt sein. Zwischen der Hülse 56 und dem Fortsatz 101 befindet sich eine Dichtung 102. Fig. 2 läßt erkennen, daß sowohl der Deckel 30 als auch der Fortsatz 101 vorgesehen sind. Dies ermöglicht die Verkleinerung der Wirkfläche des Fortsatzes 101 in der Steuerkammer 31, so daß bei Belüftung der Steuerkammer 31 zur Ansteuerung der zweiten Fahrzeughöhe der Exzenternocken 10 nur mit einer insoweit reduzierten Kraft belastet wird. Bei dem Ausführungsbeispiel der Fig. 1 ist die wirkfläche des Fortsatzes 101 größer, so daß die entsprechende Reaktionskraft auf den Exzenternocken 10 in nachteiliger Weise größer ist.

Durch ein Verdrehen des Gehäuserings 93, ändert sich gleichsam die wirksame Länge des Ventilstößels 20, wodurch es möglich ist, eine bestimmte Winkelstellung des Hebels 7 des Verstelltriebes 6 relativ zu der Abschlußstellung bei geschlossenem Einlaßventil 17, 18 und geschlossenem Auslaßventil 17, 19 einzustellen. Die Einstellung kann beispielsweise derart vorgenommen werden, daß dieser dargestellten Stellung entsprechend der ersten Fahrzeughöhe eine horizontale Lage des Hebels 7 relativ zu einer senkrecht angeordneten Achse 3 des Gehäuses 2 des Niveauregelventils 1 zugeordnet ist.

Zum Einsteuern einer zweiten Fahrzeughöhe ist die Steuerkammer 31 belüftbar. Eine Leitung 39 ist an dem Fortsatz 101 angeschlossen, der einen axialen Kanal 41 besitzt und in der Steuerkammer 31 endet.

Bei Belüftung der Steuerkammer 31 führt der Steuerkolben 28 relativ zum Führungsstück 27 einen Hub 45 aus und legt sich damit an einen Anschlag 46 der Hülse 56 an. Mit dieser Druckbeaufschlagung der Steuerkammer 31 und der nach oben gerichteten Wirkfläche 47 des Steuerkolbens 28 wird gleichsam die wirksame Länge des Ventilstößels 20 verändert und die Ansteuerung der zweiten Fahrgestellhöhe eingeleitet. Durch die Anlage des Steuerkolbens 28 an dem Anschlag 46 wird vermittels der Wirkfläche 47 zwar eine Stellkraft ausgeübt. Diese wird jedoch über den Anschlag 46 unmittelbar von der Hülse 56 des Führungsstücks 27 aufgenommen und nicht an den Exzenternocken 10 weitergegeben. Lediglich eine nicht vermeidbare Reaktionskraft entsprechend der kleinen Wirkfläche des Fortsatzes 101 kann nicht ausgeglichen werden. Der Exzenternocken 10 wird also von dem größten Teil dieser Stellkraft nicht belastet, so daß sein Verschleiß in der Ausnehmung 26 des Führungsstücks 27 erheblich reduziert ist. Auf den Exzenternocken 10 wirkt ansonsten nur die relativ kleine Kraft der Feder 38 ein, die der Reaktionskraft entgegengerichtet ist, wodurch der Verschleiß an dem Exzenternocken 10 in vertretbaren Grenzen gehalten wird.

Mit der Einstellung der zweiten Fahrzeughöhe durch Belüftung der Steuerkammer 31 wird sich eine gegenläufige Bewegung abspielen, indem zunächst bei gegenüber der ersten eingestellten Fahrzeughöhe unveränderter Relativlage des Verstelltriebes der Stößel 20 nach oben bewegt wird, so daß über das geschlossene Auslaßventil 17, 19 das Einlaßventil 17, 18 geöffnet wird. Damit strömt Druckluft aus der Vorratskammer 16 in die Luftfederbälge, und der Fahrzeugaufbau wird gegenüber der Fahrzeugachse angehoben. Durch diese Anhebung ändert sich die Winkelstellung des Hebels 7 des Verstelltriebes 6, und zwar in der Richtung, die ein Öffnen des Auslaßventiles 17, 19 verlangen würde. Das Auslaßventil 17, 19 bleibt jedoch weiterhin geschlossen. Lediglich die Öffnung des Einlaßventiles 17, 18 verringert sich, bis schließlich auch das Einlaßventil 17, 18 schließt und damit wiederum eine Abschlußstellung erreicht ist. Diese Abschlußstellung ist, was die Relativlage des Doppelventilkörpers 17 und des Einlaßsitzes 18 und des Auslaßsitzes 19 anbetrifft, die gleiche Relativlage wie bei der eingestellten ersten Fahrzeughöhe, jetzt aber zugeordnet einer zweiten Fahrzeughöhe. Es erscheint daher sinnvoll, von einer einzigen Abschlußstellung zu sprechen trotz zweier in unterschiedlicher Weise einstellbarer Fahrzeughöhen. Es versteht sich, daß infolge der wirkungsmäßig veränderten Länge des Ventilstößels 20 zwischen den beiden Fahrzeughöhen die relative Winkellage des Hebels 7 des Verstelltriebes 6 in der zweiten Fahrzeughöhe eine andere ist als in der ersten Fahrzeughöhe.

Während bei der Ausführungsform der Fig. 1 und 2 der Hub 45 des Steuerkolbens 28 unveränderlich festgelegt war, so daß über den Gehäusering 93 zwar die Abschlußstellung und damit die erste Fahrzeughöhe einstellbar waren, wurde dort auch die zweite Fahrzeughöhe entsprechend der Abschlußstellung zwangsweise mit eingestellt.

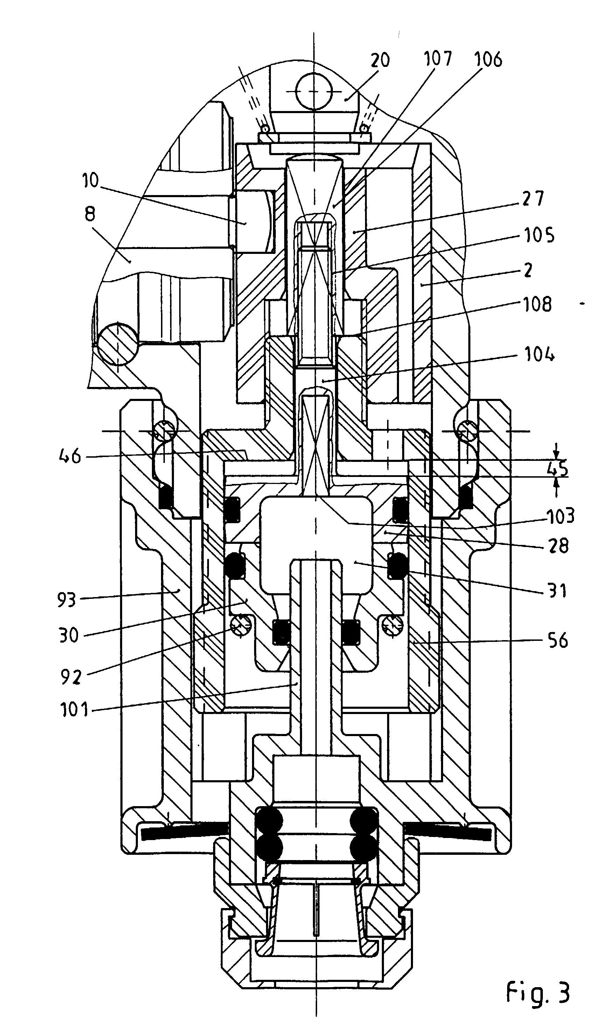

Fig. 3 zeigt eine Ausführungsform, mit der es möglich ist, getrennt die Abschlußstellung und die erste Fahrzeughöhe einerseits und die zweite Fahrzeughöhe andererseits einzustellen. Zu diesem Zweck besitzt der Steuerkolben 28 auf der Seite der Steuerkammer 31 eine Mehrkantöffnung 103, die durch den hohlen Fortsatz 101 des Gehäuserings 93 von unten her zugänglich ist, wenn die Leitung 39 entfernt wurde. Es ist dann möglich, mit dem Einsatz eines Verdrehwerkzeuges den Steuerkolben 28 zu verdrehen. Der Steuerkolben 28 weist eine Fortsatz 104 auf, an welchem über eine Gewindeverbindung 105 ein Schaft 106 vorgesehen ist. Der Schaft 106 stützt sich am Ventilstößel 20 ab und besitzt eine mehrkantige Oberfläche, mit der er in einer mehrkantig ausgebildeten Durchbrechung 107 im Führungsstück 27 verdrehgesichert und axial verschiebbar gelagert ist. Es sei daran erinnert, daß das Führungsstück 27 durch den Exzenternocken 10 selbst verdrehgesichert im Gehäuse 2 des Niveauregelventils gelagert ist. Der Schaft 106 stützt sich bei nicht belüfteter Steuerkammer 31 an der Hülse 56 ab, und zwar an einem Anschlag 108, der von der Hülse 56 gebildet wird. Damit wird gleichzeitig der Beginn des Hubes 45 des Steuerkolbens 28 und damit die erste Fahrgestellhöhe festgelegt. Das Ende des Hubes 45 ist hier nicht verstellbar, d. h. bei Belüftung der Steuerkammer 31 legt sich der Steuerkolben 28 an dem Anschlag 46 an, der den Hub 45 beendet. Dies mag der zweiten Fahrzeughöhe zugeordnet sein. Da die Festlegung und Zuordnung einer ersten und einer zweiten Fahrzeughöhe grundsätzlich vertauschbar ist oder von der jeweiligen Definition abhängt, zeigt die Fig. 3, daß mit der Einstellung der Abschlußstellung über den Gehäusering 93 die eine Fahrzeughöhe und durch Veränderung des Hubes 45 des Steuerkolbens 28 die dann zweite Fahrzeughöhe einstellbar ist. Beide Fahrzeughöhen sind unabhängig voneinander einstellbar.

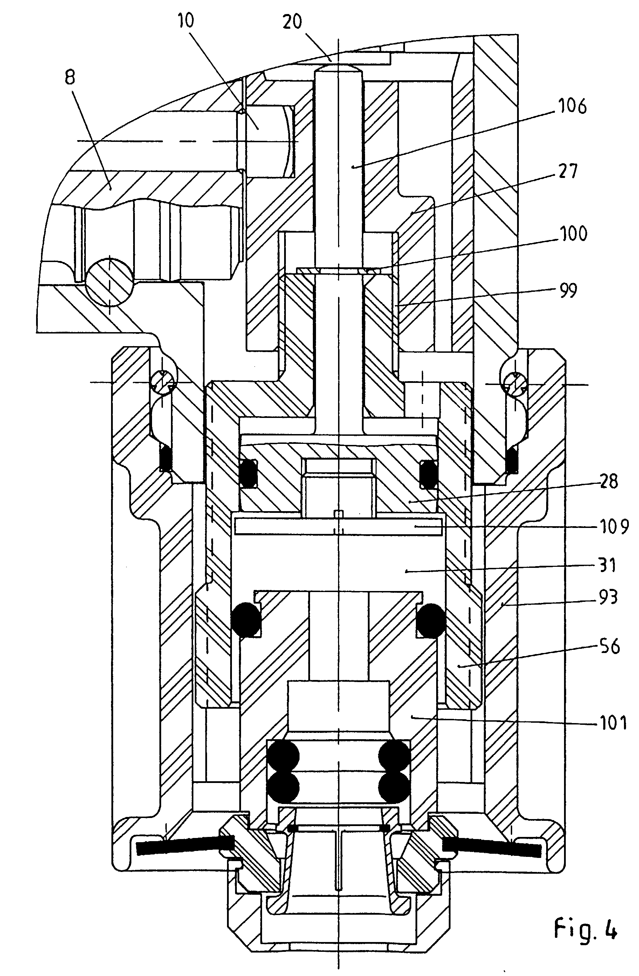

Bei der Ausführungsform gemäß Fig. 4 erstreckt sich der hier nicht einstellbare Schaft 106 des Steuerkolbens 28 zunächst lose durch die Hülse 56 und sodann lose durch das Führungsstück 27 hindurch. In dem letzteren Bereich kann der Schaft 106 auch wiederum verdrehgesichert untergebracht sein. Der Schaft 106 stützt sich über den Sicherungsring 100 an der Hülse 56 ab, wodurch der Beginn des Hubes 45 des Steuerkolbens 28 festgelegt ist. Der Steuerkolben 28 trägt auf der der Steuerkammer 31 zugekehrten Seite eine Stellschraube 109, die durch den hohlen Fortsatz 101 des Gehäuserings 93 betätigbar ist. Der Rand der Stellschraube 109 bildet mit einem Absatz in der Hülse 56 einen verstellbaren Anschlag zur Begrenzung des Hubes 45 und damit zur Einstellung der zweiten Fahrzeughöhe unabhängig von der ersten Fahrzeughöhe, die über den Gehäusering 93 eingestellt wird.

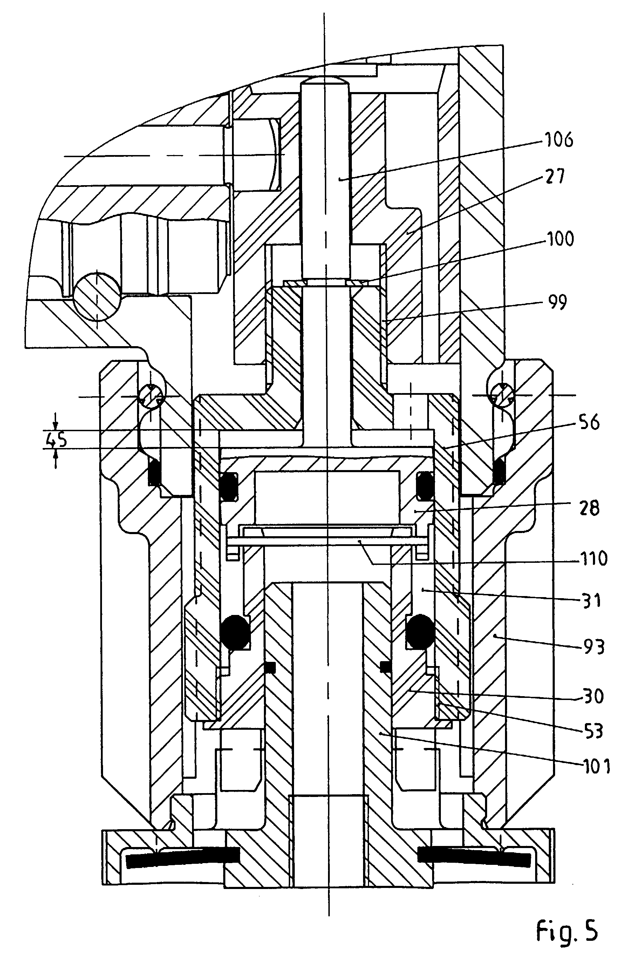

Die Ausführungsform des Niveauregelventils gemäß Fig. 5 zeigt zunächst einmal wieder den Gehäusering 93 in Verbindung mit dem Führungsstück 27 und der über die Gewindeverbindung 99 angeschlossenen Hülse 56. Der Deckel 30 ist hier über ein Gewinde 53 in der Hülse 56 verdrehbar gelagert und wird von dem Fortsatz 101 des Gehäuserings 93 axial durchsetzt, so daß hierdurch, wie schon beschrieben, die Belüftung der Steuerkammer 31 ermöglicht wird. Der Deckel 30 ist über eine Querstange 110 mit axialem Spiel an dem Steuerkolben 28 verdrehgesichert gekoppelt, so daß durch Verdrehung des Deckels 30 der Beginn des Hubes 45 des Steuerkolbens 28 und damit die betreffende Fahrzeughöhe verändert werden kann.

### BEZUGSZEICHENLISTE

- 1 -: Niveauregelventil
- 2 -: Gehäuse
- 3 -: Achse
- 4 -: Fortsatz
- 5 -: Achse
- 6 -: Verstelltrieb
- 7 -: Hebel
- 8 -: welle
- 9 -: Befestigungsschraube
- 10 -: Exzenternocken
- 11 -: Anschluß
- 12 -: Leitung
- 13 -: Vorratsbehälter
- 14 -: Ventilkörper
- 15 -: Gehäuserand
- 16 -: Vorratskammer
- 17 -: Doppelventilkörper
- 18 -: Einlaßsitz
- 19 -: Auslaßsitz
- 20 -: Ventilstößel

- 21 -: Dichtung
- 22 -: Einströmkammer
- 26 -: Ausnehmung
- 27 -: Führungsstück
- 28 -: Steuerkolben
- 29 -: Dichtung
- 30 -: Deckel
- 31 -: Steuerkammer
- 33 -: Anschlag
- 35 -: Durchbrechung
- 38 -: Feder
- 39 -: Leitung

- 41 -: Kanal
- 45 -: Hub
- 46 -: Anschlag
- 47 -: Wirkfläche
- 53 -: Gewinde
- 56 -: Hülse

- 92 -: Stift
- 93 -: Gehäusering
- 94 -: Außennut
- 95 -: Bolzen
- 96 -: Schiebekupplung
- 97 -: Rippe
- 98 -: Nut
- 99 -: Gewindeverbindung
- 100 -: Sicherungsring
- 101 -: Fortsatz
- 102 -: Dichtung
- 103 -: Mehrkantöffnung
- 104 -: Fortsatz
- 105 -: Gewindeverbindung
- 106 -: Schaft
- 107 -: Durchbrechung
- 108 -: Anschlag
- 109 -: Stellschraube
- 110 -: Querstange

## Patentansprüche

1. Niveauregelventil zum selbsttätigen Konstanthalten der Fahrzeughöhe eines Nutzfahrzeuges mit Luftfederung, mit einem federbelasteten Doppelventilkörper (17), einem Einlaßsitz (18) und einem einen Auslaßsitz (19) für den Doppelventilkörper (17) tragenden und abgedichtet verschiebbaren hohlen Ventilstößel (20), dessen Stellung relativ zum Gehäuse (2) des Niveauregelventils (1) über einen die Fahrzeughöhe abtastenden Verstelltrieb (6) mit Führungsstück (27) und Exzenternocken (10) veränderbar ist, wobei über den Verstelltrieb (6) die Abschlußstellung einer ersten Fahrzeughöhe einsteuerbar ist, bei der sowohl das Einlaßventil (17, 18) als auch das Auslaßventil (17, 19) geschlossen sind, und mit einem fluchtend zum Ventilstößel (20) vorgesehenen Steuerkolben (28), der durch eine belüftete Steuerkammer (31) mit Druck beaufschlagbar ist und der über die Verstellung der Abschlußstellung die Ansteuerung einer zweiten Fahrzeughöhe erlaubt, **dadurch gekennzeichnet,** daß das Führungsstück (27) des Verstelltriebes (6) nach der dem Einlaßsitz (18) abgekehrten Seite verlängert und zu einer Hülse (56) ausgeformt ist, daß zwischen dem Führungsstück (27) und der Hülse (56) eine Gewindeverbindung (99) vorgesehen ist, daß die Steuerkammer (31) in der Hülse (56) des Verstelltriebes (6) angeordnet ist und der Steuerkolben (28) in der Hülse (56) abgedichtet und begrenzt verschiebbar gelagert ist und durch seine Relativbewegung gegenüber der Hülse (56) die Ansteuerung der zweiten Fahrzeughöhe zuläßt, ohne den Exzenternocken (10) des Verstelltriebes (6) durch die auf den Steuerkolben (28) ausgeübte Stellkraft zu belasten, daß sich der in Richtung des Führungsstücks (27) des Verstelltriebes (6) vorgespannte Ventilstößel (20) am Steuerkolben (28) abstützt und daß die Hülse (56) zumindest teilweise von einem am Gehäuse (2) drehbar gelagerten Gehäusering (93) umgeben ist, der mit der Hülse (56) über eine axiale Bewegung der Hülse (56) zulassende und bei Verdrehung des Gehäuserings (93) eine Verdrehung der Hülse (56) bewirkende Schiebekupplung (96) in Verbindung steht.

2. Niveauregelventil nach Anspruch 1, **dadurch gekennzeichnet**, daß die Schiebekupplung (96) sich axial erstreckende Rippen (97) und entsprechenden Nuten (98) am inneren Umfang des Gehäuserings (93) einerseits und am äußeren Umfang der Hülse (56) andererseits aufweist.

3. Niveauregelventil nach Anspruch 1, **dadurch gekennzeichnet**, daß die Hülse (56) einen den Hub (45) des Steuerkolbens (28) in der Hülse (56) festlegenden und auf ihr abgestützten Deckel (30) aufweist.

4. Niveauregelventil nach Anspruch 3, **dadurch gekennzeichnet**, daß der Deckel (30) ringförmig ausgebildet ist, und daß der Gehäusering (93) einen in der Achse des Niveauregelventils den Deckel (30) dichtend durchsetzenden Fortsatz (101) aufweist, über den die Steuerluft zur Steuerkammer (31) axial zuführbar ist.

5. Niveauregelventil nach Anspruch 3, **dadurch gekennzeichnet**, daß der Deckel (30) über ein Gewinde (53) in der Hülse (56) verstellbar und damit der Hub (45) des Steuerkolbens (28) für die Einsteuerung der beiden Fahrzeughöhen einstellbar ist.

6. Niveauregelventil nach Anspruch 4, **dadurch gekennzeichnet**, daß der Fortsatz (101) des Gehäuserings (93) einen Anschluß für die Leitung der Steuerluft trägt.

7. Niveauregelventil nach einem oder mehreren der Ansprüche 1 bis 6, **dadurch gekennzeichnet**, daß der Gehäusering (93) in einer Außennut (94) am Gehäuse (2) drehbar gelagert ist und daß zwischen Gehäuse (2) und Gehäusering (93) eine Dichtung (102) vorgesehen ist.

8. Niveauregelventil nach einem oder mehreren der Ansprüche 1 bis 7, **dadurch gekennzeichnet**, daß der Steuerkolben (28) eine durch den Fortsatz (101) des Gehäuserings (93) zugängliche Mehrkantöffnung (103) aufweist, daß der Steuerkolben (28) einen die Hülse (56) und das Führungsstück (27) durchsetzenden Fortsatz (104) aufweist, der den Ventilstößel (20) betätigt und über eine Gewindeverbindung (105) geteilt ist, um den Hub des Steuerkolbens (28) und damit die zweite Fahrzeughöhe ohne zwangsweise Verstellung der Abschlußstellung und damit der ersten Fahrzeughöhe einzustellen.

9. Niveauregelventil nach einem oder mehreren der Ansprüche 1 bis 7, **dadurch gekennzeichnet**, daß am Steuerkolben (28) auf der dem Ventilstößel (20) abgekehrten Seite eine Stellschraube (109) vorgesehen ist, die mit der Hülse (56) einen einstellbaren Anschlag für die Begrenzung des Hubes des Steuerkolbens (28) bildet.

## Claims

1. A levelling valve for automatically keeping constant the vehicle height of a commercial vehicle with air suspension, the levelling valve comprising a spring loaded double valve body (17), an inlet seat (18), a hollow control rod (20) having an outlet seat (19) for the double valve body (17) and movable toward sealed engagement with said double valve body (17), an actuation drive (6) having a guiding member (27) and an eccentric follower (10) responsive to the change in vehicle height for moving the control rod (20) towards or away from sealing engagement with said double valve body (17), whereby a first vehicle height according to a closing position, in which both the inlet valve (17, 18) and the outlet valve (17, 19) are closed, may be controlled via said actuation drive (6), and a control piston (28) being located in a control chamber (31) in alignment with the control rod (20) and being provided for aeration of the control chamber (31) with air under pressure and for the alternatively reaching the closing position of a second vehicle height, **wherein** said guiding member (27) of said actuation drive (6) is lengthened in the direction opposite to said inlet seat (18) and is designed to form a sleeve (56), a thread connection (99) is provided between said guiding member (27) and said sleeve (56), said control chamber (31) is located in said sleeve (56) of said actuation drive (6), said control piston (28) is slidingly and sealingly arranged in said sleeve (56) to make possible the adjustment of a second vehicle height by its relative motion with respect to said sleeve (56) so that said eccentric follower (10) of said actuation drive (6) is not loaded by a force acting on said control piston (28), said control rod (20) being biased in the direction of said guiding member (27) of said actuation drive (6) is supported on said control piston (28), and said sleeve (56) at least partially is surrounded by a ring (93) as a rotatable part of said housing (2), said ring (93) being connected with said sleeve (56) via a coupling (96) permitting axial displacement between said sleeve (56) and said ring (93) and causing a turning of said sleeve (56) in response to a turning of said ring (93).

2. The levelling valve of claim 1, **wherein** said coupling (96) is provided with ribs (97) extending axially and with slots (98), said ribs and said slots being arranged on the inner circumference of said ring (93) on the one hand and on the outer circumference of said sleeve (56) on the other hand.

3. The levelling valve of claim 1, **wherein** said sleeve (56) comprises a cover (30) defining the stroke (45) of said control piston (28) in said sleeve (56).

4. The levelling valve of claim 3, **wherein** said cover (30) is designed with a ring-like fashion, and said ring (93) has an extension (101) sealingly extending said cover (30) in the direction of the axis of said levelling valve in order to make possible the admission of the control air to said control chamber (31).

5. The levelling valve of claim 3, **wherein** said cover (30) is adjustably positioned in said sleeve (56) via a thread (53) and thus the stroke (45) of the control piston (28) for the alternative adjustment of the two vehicle heights may be adjusted.

6. The levelling valve of claim 4, **wherein** said extension (101) of said ring (93) has a connection for a conduit of control air.

7. The levelling valve of one or a several of the claims 1 to 6, **wherein** said ring (93) is arranged in a rotatable manner in an outer groove (94) of said housing (2) and a sealing (102) is provided between said housing (2) and said ring (93).

8. The levelling valve of one or a several of the claims 1 to 7, **wherein** said control piston (28) has a multipolygonal opening (103) being accessible through said extension (101) of said ring (93), said control piston (28) is provided with an extension (104) extending said sleeve (56) and said guiding member (27) actuating said control rod (20) and being divided via a thread connection (105) to make possible the adjustment of the stroke of said control piston (28) and thus of the second vehicle height without common adjustment of the closing position and thus of the first vehicle height.

9. The levelling valve of one or a several of the claims 1 to 8, **wherein** an adjustment screw (109) is positioned on said control piston (28) at the side not facing the control rod (20), said adjustment screw (109) together with said sleeve (56) forming an adjustable stop to limit the stroke of said control piston (28).

## Revendications

1. Soupape de régulation de niveau destinée à maintenir la hauteur d'un véhicule utilitaire à suspension pneumatique constante de manière automatique, avec un corps de soupape double (17) sous contrainte d'un ressort, un siège d'admission (18) et un siège d'échappement (19) pour le poussoir de soupape creux (20) monté hermétiquement à glissement qui porte le corps de soupape double (17), poussoir de soupape (20) dont la position peut être modifiée par rapport au boîtier (2) de la soupape de régulation de niveau (1) par l'intermédiaire d'un organe de réglage (6) comportant une pièce de guidage (27) et des cames d'excentrique (10), organe de réglage (6) qui explore la hauteur du véhicule où, au moyen de l'organe de réglage (6), la position de fermeture d'une première hauteur de véhicule peut être réglée, soupape de régulation de niveau dont la soupape d'admission (17, 18) et la soupape d'échappement (17, 19) sont fermées, et comporte un piston de commande (28), de même axe que le poussoir de soupape (20), piston de commande (28), pouvant être mis sous pression par l'intermédiaire d'une chambre de commande (31) et autorisant, par le réglage de la position de fermeture, la sélection d'une deuxième hauteur de véhicule, caractérisée
en ce que la pièce de guidage (27) de l'organe de réglage (6) est prolongée du côté opposé à celui du siège d'admission et reçoit la forme d'un fourreau (56),
en ce qu'une liaison par pas de vis (99) est prévue entre la pièce de guidage (27) et le fourreau (56),
en ce que la chambre de commande (31) est disposée dans le fourreau (56) de l'organe de réglage (6), que le piston de commande (28) est monté hermétiquement à déplacement limité dans le fourreau (56) et autorise, par son mouvement par rapport au fourreau (56), la sélection de la deuxième hauteur de véhicule, sans que la came d'excentrique (10) de l'organe de réglage (6) soit sollicitée par la force de commande exercée sur le piston de commande (28),
en ce que le poussoir de soupape (20) mis en précontrainte dans la direction de la pièce de guidage (27) de l'organe de réglage (6) s'appuie sur le piston de commande (28), et
en ce que le fourreau (56) est entouré au moins partiellement par une bague (93) montée à rotation sur le boîtier (2), cette bague étant reliée au fourreau par un accouplement à glissement (96) qui autorise un mouvement axial du fourreau (56) et entraîne, suite à une rotation de la bague (93) du boîtier, une rotation du fourreau (56) .

2. Soupape de régulation de niveau suivant la revendication 1, caractérisée
en ce que l'accouplement à glissement (96) présente des nervures (97) s'étendant axialement et des rainures (98) correspondant aux nervures pratiquées d'une part dans la surface interne de la bague (93) du boîtier, et dans la surface externe du fourreau (56), d'autre part.

3. Soupape de régulation de niveau suivant la revendication 1, caractérisée
en ce que le fourreau (56) présente un couvercle (30) définissant la course (45) du piston de commande (28) dans le fourreau (56), ce couvercle s'appuyant sur le fourreau.

4. Soupape de régulation de niveau suivant la revendication 3, caractérisée
en ce que le couvercle (30) est de forme annulaire, et en ce que la bague (93) du boîtier présente un appendice (101) qui a le même axe que la soupape de régulation de niveau et est inséré hermétiquement dans le couvercle (30), appendice par lequel l'air de commande peut être amené axialement dans la chambre de commande (31).

5. Soupape de régulation de niveau suivant la revendication 3, caractérisée
en ce que le couvercle (30) peut être réglé par rapport au fourreau (56) grâce à un filetage (53), la course (45) du piston de commande (28) pouvant ainsi être réglée en vue de la sélection des deux hauteurs du véhicule.

6. Soupape de régulation de niveau suivant la revendication 4 caractérisée
en ce que l'appendice (101) de la bague (93) du boîtier porte un raccordement pour la conduite d'air de commande.

7. Soupape de régulation de niveau suivant l'une quelconque ou plusieurs des revendications 1 à 6 caractérisée
en ce que la bague (93) du boîtier est montée à rotation dans une rainure extérieure (94) du boîtier (2), et qu'est prévu un joint d'étanchéité (102) entre le boîtier (2) et la bague (93) du boîtier.

8. Soupape de régulation de niveau suivant l'une quelconque ou plusieurs des revendications 1 à 7 caractérisée
en ce que le piston de commande (28) présente une ouverture polygonale (103) accessible par l'appendice (101) de la bague (93) du boîtier, que le piston de commande (28) présente un appendice (104) passant au travers du fourreau (56) et de la pièce de guidage (27), appendice qui actionne le poussoir de piston (20) et est subdivisé au moyen d'un filetage de liaison (105) de manière à autoriser le réglage de la course du piston de commande (28) et dès lors, celui de la deuxième hauteur du véhicule, sans que soit nécessairement modifié de ce fait le réglage de la position de fermeture dont dépend la première hauteur de véhicule.

9. Soupape de régulation de niveau suivant l'une quelconque ou plusieurs des revendications 1 à 7 caractérisée
en ce que, sur le piston de commande (28), et du côté opposé à celui du poussoir de soupape (20), il est prévu une vis de réglage (109) qui forme avec le fourreau (56) une butée réglable destinée à limiter la course du piston de commande (28).
